(19) **Europäisches Patentamt / European Patent Office / Office européen des brevets**

(11) **EP 4 459 566 B1**

(12) **EUROPEAN PATENT SPECIFICATION**

(45) Date of publication and mention
of the grant of the patent:
**22.07.2026  Bulletin 2026/30**

(21) Application number: **23171950.1**

(22) Date of filing: **05.05.2023**

(51) International Patent Classification (IPC):
**G06V 10/774** (2022.01)    **G06V 20/70** (2022.01)
**G06V 40/18** (2022.01)

(52) Cooperative Patent Classification (CPC):
**G06V 10/774; G06V 20/70; G06V 40/18**

(54) **A COMPUTER-IMPLEMENTED METHOD OF GENERATING AT LEAST ONE DATASET ASSOCIATED WITH OBJECTS OF AT LEAST ONE IMAGE OF A REAL ENVIRONMENT FOR ANNOTATING AT LEAST ONE IMAGE FRAME FOR TRAINING A MACHINE LEARNING MODEL**

COMPUTERIMPLEMENTIERTES VERFAHREN ZUR ERZEUGUNG MINDESTENS EINES DATENSATZES MIT OBJEKTEN EINER REALEN UMGEBUNG ZUM ANNOTIEREN MINDESTENS EINES EINZELBILDES ZUM TRAINIEREN EINES MASCHINENLERNMODELLS

PROCÉDÉ MIS EN UVRE PAR ORDINATEUR POUR GÉNÉRER AU MOINS UN ENSEMBLE DE DONNÉES ASSOCIÉ À DES OBJETS D'AU MOINS UNE IMAGE D'UN ENVIRONNEMENT RÉEL

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**06.11.2024  Bulletin 2024/45**

(73) Proprietor: **Ramblr GmbH**
**82049 Pullach im Isartal (DE)**

(72) Inventors:
• **Dr. Guggiana Nilo, Drago**
**Munich (DE)**
• **Dr. Schubert, Philipp**
**Munich (DE)**
• **Krebs, Jennifer**
**Gilching (DE)**
• **Dr. Alt, Thomas**
**Pullach i. Isartal (DE)**

(74) Representative: **Schmitt-Nilson Schraud Waibel Wohlfrom**
**Patentanwälte Partnerschaft mbB**
**Pelkovenstraße 143**
**80992 München (DE)**

(56) References cited:
• VAIDYANATHAN PREETHI ET AL: "Computational framework for fusing eye movements and spoken narratives for image annotation", JOURNAL OF VISION (CHARLOTTESVILLE, VA.), 1 July 2020 (2020-07-01), United States, XP093077227, Retrieved from the Internet <URL:https://www.ncbi.nlm.nih.gov/pmc/articles/PMC7424957/pdf/jovi-20-7-13.pdf> [retrieved on 20230830], DOI: 10.1167/jov.20.7.13
• MO YUJIAN ET AL: "Review the state-of-the-art technologies of semantic segmentation based on deep learning", NEUROCOMPUTING, ELSEVIER, AMSTERDAM, NL, vol. 493, 11 January 2022 (2022-01-11), pages 626 - 646, XP087053838, ISSN: 0925-2312, [retrieved on 20220111], DOI: 10.1016/J.NEUCOM.2022.01.005
• YUN KIWON ET AL: "Exploring the role of gaze behavior and object detection in scene understanding", FRONTIERS IN PSYCHOLOGY, vol. 4, 1 January 2013 (2013-01-01), XP093077217, DOI: 10.3389/fpsyg.2013.00917

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to computer-implemented methods of generating at least one dataset associated with one or more objects of at least one image of a scene of a real environment, in particular egocentric video data. Such generated at least one dataset is configured for input to a computer-implemented process for annotating at least one image frame of a scene of a real environment, particularly for input to and training at least one image-based machine learning model. The invention also relates to computer-implemented methods of annotating at least one image frame of a scene of a real environment, in particular egocentric video data, configured for input to and training at least one image-based machine learning model, and to a corresponding computer program.

For image-based hardware systems, such as intelligent wearables operating based on real-time object recognition, such as applied in Augmented Reality applications, it is important that the systems are capable of identifying and categorizing numerous and highly diverse objects in the real environment surrounding the user. Such systems could be relied upon, for example, to identify where keys were left, how to change a car battery, or how to avoid a hazard whilst cycling.

However, in order to ensure that such image-based systems, such as in Augmented Reality applications, operate correctly, they need to be trained on real images or dynamic image sequences where the images are annotated to define various real objects, in particular objects of material relevance to the particular system, such as interacted-with objects, visually prominent objects, or universally important objects.

In this context, traditionally, datasets have been manually annotated, meaning that a human operator has manually labelled or assigned clusters of pixels to certain object categories or instances. If datasets are manually tagged, a large workforce is required to generate the enormous volume of labelled data required to power the computer models which are then employed, e.g., in Augmented Reality applications. Annotating data at that large scale often comes with a trade-off in consistency and labelling quality. Applicants of such technologies often avoid large-scale annotation tasks due to a lack of staff, time, and resources.

Video data annotation comes with challenges of its own, making it prohibitively difficult, time consuming, and expensive. Video annotation is typically known as the task of labelling and tagging video footage to train a computer vision model. Annotating videos (or image sequences) is more complicated and labour-intensive than still image annotation, as the target objects are in motion. Video annotation is processed as frame-by-frame image data. As such, a 10-second video consists of hundreds of frames, which means it takes considerable time to complete a single video annotation task.

Additionally, not every frame of a video sequence contains useful or relevant object information for specialized machine learning tasks. Time and resources are better spent in annotating relevant objects or, more appropriately, so-called Objects of Interest ("OoI" denotes both the singular and plural forms). For example, if training a computer model to recognize the tools and range of human movements required for making coffee, it is superfluous to this task to recognize and label objects such as kitchen tiles, lightbulb, oven, dishwasher, fridge magnets, etc. In the foregoing example, the Objects of Interest (OoI) would be the coffee maker, coffee pot, water, coffee filters, coffee beans, coffee grounds, etc.

There is available prior art in the area of OoI detection based on so-called bottom-up models, for example, those based on visual salience or visual indicators. See, for example, Ko, B. C., & Nam, J. Y. (2006). Object-of-interest image segmentation based on human attention and semantic region clustering. JOSA A, 23(10), 2462-2470.

Systems have also been created to utilize bottom-up saliency and pointing gestures to identify pointed-at objects for machine learning recognition and learning tasks. See, for example, Schauerte, B., Richarz, J., & Fink, G. A. (2010, October). Saliency-based identification and recognition of pointed-at objects. In 2010 IEEE/RSJ International Conference on Intelligent Robots and Systems (pp. 4638-4643). IEEE.

There is also research on modelling top-down attention, e.g., reflecting factors such as prior knowledge, current goals, and instructions to predict where humans will look within an image, see for example Burra, N., Mares, I., & Senju, A. (2019). The influence of top down modulation on the processing of direct gaze. Wiley Interdisciplinary Reviews: Cognitive Science, 10(5), e1500. Top-down attention can represent a voluntary allocation of attention to certain objects, features, or regions in space. For instance, a subject can choose to attend to all yellow items or a region of space in the sky.

There are several studies that consider the intertwining of object recognition and attention deployment. See, e.g., 't Hart, B. M., Schmidt, H. C., Roth, C., & Einhäuser, W. (2013). Fixations on objects in natural scenes: dissociating importance from salience. Frontiers in psychology, 4, 455.

In particular, there are systems that fuse fixation and attention mapping to improve detection of Objects of Interest. See, e.g., US 9 740 949 B1 which presents a system and method for detection of Objects of Interest in dynamic imagery by fusing cognitive algorithms and a human analyst to improve the accuracy of detection.

Human eye-tracking data has been used in the prior art to generate eye-fixation maps from input video data, whereby fixation points are graphed to indicate the positions of potential OoI because people tend to fixate on certain objects that interest them. The relationship between gaze and objects is a recognized tool for the understanding of natural scene processing with potential for improving video annotation processes. Specific to video annotation, there has been work done in Object of Interest segmentation in video sequences based on gaze-based interaction. See, e.g., Krieger, L.,

Heidemann, G., & Schöning, J. (2018, December). Object of Interest Segmentation in Video Sequences with Gaze Data. In 2018 IEEE International Conference on Image Processing, Applications and Systems (IPAS) (pp. 104-109). IEEE.

In terms of object mask prediction and human annotator correction, EP 3 540 691 A1 provides a method for image segmentation and annotation performing pixel-level clustering of an image. These clusters are then selected based on their correspondence to a region of interest ("ROI") defined by a predetermined image mask and comparing the proposed ROI to the actual ROI.

There are annotation systems available, for example, TORAS from the University of Toronto (Kar, A., Kim, S. W., Boben, M., Gao, J., Li, T., Ling, H., ... Fidler, S. (2021). Toronto Annotation Suite. Retrieved from https://aidemos.cs.toronto.edu/toras), which enables state-of-the-art and quick manual annotation of images. Instructions on how to annotate a particular image can be manually assigned by task administrators, but most contextual and task-specific information is unavailable for the Annotator. This results in consistency and quality issues across different annotation projects.

Preethi Vaidyanathan et al., "Computational framework for fusing eye movements and spoke narratives for image annotation", Journal of Vision, 1 July 2020, 20(7):13, pages 1-28 (XP093077227) discloses a framework that integrates human-elicited gaze and spoken language to label perceptually important regions in an image. It relies on the notion that gaze and spoken narratives can jointly model how humans inspect and analyze images. Using an unsupervised bitext alignment algorithm originally developed for machine translation, meaningful mappings between participants' eye movements over an image and their spoken descriptions of that image are created. The resulting multimodal alignments are then used to annotate image regions with linguistic labels which involves the concept of semantic image region annotation with identifying and segmenting perceptually meaningful regions in an image and labeling them appropriately.

Thus, there exists a need for a customized computer-implemented method of generating at least one dataset associated with one or more objects of at least one image of a scene of a real environment, which is configured for input to a computer-implemented process for annotating at least one image frame of a scene of a real environment and enables more efficient classification of digital images or videos and training of image-based machine learning models, such as employed in augmented reality applications or autonomous driving.

The present disclosure relates to a computer-implemented method and computer program according to the appended claims. Embodiments are disclosed in the dependent claims.

According to an aspect, there is disclosed a computer-implemented method of generating at least one dataset associated with one or more objects of at least one image of a scene of a real environment configured for input to a computer-implemented process for annotating at least one image frame of a scene of a real environment for input to and training at least one machine learning model, the method comprising:

receiving, by at least one computing device, at least one image of a scene of a real environment captured by an image sensor operated by a user;

receiving, by the at least one computing device, audio data from the user detected by at least one audio sensor and gaze tracking data of the user detected by at least one human gaze tracking sensor while capturing the at least one image by the user,

performing, by at least one computing device, an audio parsing process parsing at least part of the received audio data from the user into text format and generating a set of terms determined in the parsing process indicative of a user's articulated task or activity while operating the image sensor,

pre-allocating objects of interest from the generated set of terms determined in the parsing process, associating a probability with each of the pre-allocated objects of interest, and generating a scene objects of interest list associated with the at least one image comprising a respective object category and associated probability for each of the pre-allocated objects of interest,

generating a gaze heatmap from the received gaze tracking data,

processing at least part of the at least one image through a panoptic segmentation model and generating a set of segmentation masks, each segmentation mask of the set of segmentation masks having a respective assigned object category and panoptic segmentation confidence,

generating at least one dataset comprising a set of ranked objects of interest with objects of interest ranked according to at least one aggregated score determined based on the generated scene objects of interest list, the generated heatmap and generated set of segmentation masks, configured for input to a computer-implemented process for annotating at least one image frame of a scene of a real environment for input to and training at least one machine learning model.

According to another aspect, there is disclosed a computer-implemented method of generating at least one dataset associated with one or more objects of at least one image of a scene of a real environment configured for input to a computer-implemented process for annotating at least one image frame of a scene of a real environment for input to and training at least one machine learning model, the method comprising:

receiving, by at least one computing device, at least one image of a scene of a real environment captured by an image sensor operated by a user;

receiving, by the at least one computing device, audio data from the user detected by at least one audio sensor and gaze tracking data of the user detected by at least one human gaze tracking sensor while capturing the at least one image by the user,

performing, by at least one computing device, an audio parsing process parsing at least part of the received audio data from the user and generating parsed audio data indicative of a user's articulated task or activity or an object of interest of the scene while operating the image sensor,

generating a gaze heatmap from the received gaze tracking data,

processing at least part of the at least one image through a panoptic segmentation model and generating a set of segmentation masks, each segmentation mask of the set of segmentation masks having a respective assigned object category,

generating an audio-visual ground truth comprising location information and a respective object category for at least one object of the at least one image from the parsed audio data and gaze heatmap, and

matching the generated audio-visual ground truth with a spatially corresponding segmentation mask of the generated set of segmentation masks and its assigned object category, and generating at least one dataset of the audio-visual ground truth comprising at least one data label indicative of the respective object category and the matched segmentation mask, the generated at least one dataset configured for input to a computer-implemented process for annotating at least one image frame of a scene of a real environment for input to and training at least one machine learning model.

Thus, according to the invention, it is possible to automate a decision-making process for training an image-based machine learning model as to what qualifies as an object of interest and what does not. Specifically, the proposed methods reduce the human annotator's range of choice and thus cut down on ambiguity and deliberation time when determining which objects in a given key frame are OoI. Only the objects relevant to the annotation task at hand are annotated. By reducing the annotator's mental load and their arbitrary choices through guidance signals, the quality and speed of task-specific annotation and, thus, training of an image-based machine learning model, such as employed in augmented reality (AR) applications or autonomous driving, can be improved.

According to an embodiment, the set of ranked objects of interest is configured to be used in a computer-implemented process for annotating at least one image frame of a scene of a real environment for input to and training at least one machine learning model of an augmented reality application.

According to an embodiment, the method further comprises providing a list of universal objects of interest not processed from the at least one image, and augmenting the scene objects of interest list with the list of universal objects of interest.

According to an embodiment, the method further comprises generating an audio-visual ground truth comprising an object category and respective location information for at least one object of the at least one image from the received audio data and gaze tracking data of the user, and matching the generated audio-visual ground truth with a spatially corresponding segmentation mask of the generated set of segmentation masks and its assigned object category.

According to an embodiment, the at least one aggregated score is determined based on a weighted sum of (i) the probability of the respective object of interest contained in the scene objects of interest list, (ii) the respective gaze heat for the corresponding segmentation mask having an object category corresponding to the respective object of interest, and (iii) the respective panoptic segmentation confidence of the corresponding segmentation mask having an object category corresponding to the respective object of interest.

According to an embodiment, determining the at least one aggregated score comprises matching object categories included in the scene objects of interest list with respective object categories of the generated set of segmentation masks, and matching of segmentation masks of the generated set of segmentation masks and the gaze heatmap, wherein optionally determining the at least one aggregated score comprises assigning a score from the scene objects of interest list to a respective object category which could not be matched to an object category of the generated segmentation masks.

According to an embodiment, the method further comprises adding at least one region of interest originating from the gaze heat above a predetermined threshold that was not matched to a generated segmentation mask to the scene objects of interest list, wherein the at least one region of interest is assigned an undefined object category.

According to an embodiment, the image sensor and optionally the human gaze tracking sensor are part of a wearable computing device worn by the user while looking at the scene of the real environment. For example, such wearable computing device is, or comprises wearable glasses.

According to another aspect, there is provided a computer-implemented method of annotating at least one image frame of a scene of a real environment configured for input to and training at least one machine learning model, the method comprising:

receiving, by at least one computing device, at least one image frame of a scene of a real environment to be annotated and providing the at least one image frame to a display device for presenting to a user;

receiving, by the at least one computing device, at least a part of a set of ranked objects of interest provided according to a method of generating at least one dataset comprising a set of ranked objects of interest as described herein, presenting at least a portion of the received set of ranked objects of interest on the display device while displaying the at least one image frame to be annotated on the display device,

receiving instructions from a human annotator instructing the at least one computing device to add or refine one or more of the object categories or segmentation masks to the at least one image frame and augmenting the at least one image frame with corresponding annotation information to at least one annotated dataset configured for input to and training at least one machine learning model.

According to an embodiment, the at least one portion of the set of ranked objects of interest is presented on the display device after receiving instructions from the annotator instructing the at least one computing device to confirm or correct any stored audio-visual ground truth, wherein optionally the at least one portion of the set of ranked objects of interest presented on the display device comprises only objects of interest which are not included in the confirmed or corrected audio-visual ground truth.

According to a further aspect, there is provided a computer-implemented method of annotating at least one image frame of a scene of a real environment configured for input to and training at least one machine learning model, the method comprising:

receiving, by at least one computing device, at least one image frame of a scene of a real environment to be annotated and providing the at least one image frame to a display device for presenting to a user;

receiving, by the at least one computing device, at least one dataset of an audio-visual ground truth generated according to a method of generating at least one dataset of audio-visual ground truth as described herein, and

receiving instructions from a human annotator instructing the at least one computing device to add or refine one or more of the respective object categories and segmentation masks to the at least one image frame and augmenting the at least one image frame with corresponding annotation information to at least one annotated dataset configured for input to and training at least one machine learning model.

According to an embodiment, the method further comprises presenting one or more segmentation masks of the set of segmentation masks on the display device in an overlapping manner with the at least one image frame, and receiving instructions from the annotator instructing the at least one computing device to confirm or correct the at least one dataset of an audio-visual ground truth by confirming or refining one or more of the respective object category and presented segmentation mask.

According to an embodiment, the at least one image frame corresponds to the at least one image captured by the image sensor or, if the at least one image is a part of a video stream, corresponds to an image captured by the image sensor preceding or succeeding the at least one image captured by the image sensor.

According to a further aspect, there is provided a computer program comprising instructions which, when the program is executed by at least one computing device, cause the at least one computing device to carry out the method of one of the preceding claims.

According to aspects of the present invention, beyond image-based systems, annotation of an image and video imagery can be aided with speech-to-text solutions, e.g. based on existing technologies, which translate vocal tags created by a human Collector during data collection into machine-readable form. For example, the human Collector can say, "tomato" when looking, pointing to, or touching a tomato in the scene. These vocal tags can additionally be reduced to category labels.

According to an embodiment, the at least one image-based machine learning model is configured to be used by one or more processes of an augmented reality application. The sensor data may include egocentric sensor data collected from the perspective of a user of a wearable computing device. According to an embodiment, the sensor data are multisensor data provided by one or more sensors. In one implementation, there could be video annotation solutions stemming from natural-language processing (NLP).

For example, data may be collected by a wearable hardware device (such as "Tobii Pro Smart Glasses") without an AR application. However, according to another embodiment, an AR application running on a wearable hardware device may simultaneously provide an AR experience whilst collecting egocentric sensor data.

The invention may be applicable to other fields of use beyond Augmented Reality, such as, autonomous driving.

According to aspects of the invention, the sensor data include the following data: one or more images, such as one or more video streams; audio data; collector eye-gaze data (in particular, corneal reflection, stereo geometry, eye orientation and/or movement).

Aspects of the invention will now be further described in connection with the following Figures, which illustrate exemplary embodiments, in which

Fig. 1    shows a computer-implemented method according to embodiments of the present disclosure, particularly disclosing an embodiment of a workflow of multimodal data processing and annotation,

Fig. 2    shows an exemplary scenario in an exemplary use case of OoI enhancements and guidance signals regarding a potential collection process for a scene of "cooking pasta",

Fig. 3    shows an exemplary pre-processing scheme to obtain a ranked OoI list based on gaze, panoptic segmentation and parsing the audio into a Scene OoI List,

Fig. 4    illustrates an embodiment for Stage 3-1 according to the workflow as depicted in Fig. 1, confirming AV Ground Truth,

Fig. 5    shows an embodiment for Stage 3-2 according to the workflow as depicted in Fig. 1, illustrating a ranked OoI review.

Aspects of the invention will now be described in more detail in reference to the Figures. It should be noted that the invention is not limited to the disclosed embodiments, which are provided mainly for describing certain aspects of the invention in an exemplary manner. A detailed description of one or more embodiments of the invention is provided below along with accompanying Figures that illustrate the invention. The invention is described in connection with such embodiments, but the invention is not limited to any embodiment. For the purpose of clarity, technical material or terms that are known to the skilled person in the art will not be described in detail so that the invention is not unnecessarily obscured.

Machine Learning (ML) as used herein is understood as a term which is commonly known in the art. The technique involved with ML is sometimes also designated as Deep Learning (DL), Artificial Intelligence (AI), etc. ML is used as a term which describes all the different forms of algorithms which are based on machine learning or deep learning. This could be Image Classification, Object Detection, or other ways of interpreting sensor, task and/or process data. For example, deep learning analysis is performed using a machine learning model such as an artificial neural network.

A machine learning model is understood as being a model ready to be used by an AI or ML algorithm and is, for example, an artificial neural network.

A(n) (image) frame is a common term known in the art used for a single still image. A keyframe is a frame, for example having one or more properties such as contrast exceeding a particular threshold, which is suitable to be selected among a plurality of frames for the further procedure according to aspects of the invention as described herein. For example, in case of a video, keyframe(s) of a video, for example, typically aim to be the frame or smallest set of frames that provide an accurate or most accurate representation of the video.

Annotation or annotated data refers to data which has a configuration such that it can be used for input to and training at least one machine learning model for generating ML-based processes or components of such processes. Particularly, annotations or annotated data comprise machine-readable information about the data, e.g., used for input to and training a machine learning model. Typically, it comprises a description (annotation) of the captured data in a format which can be further processed by a machine.

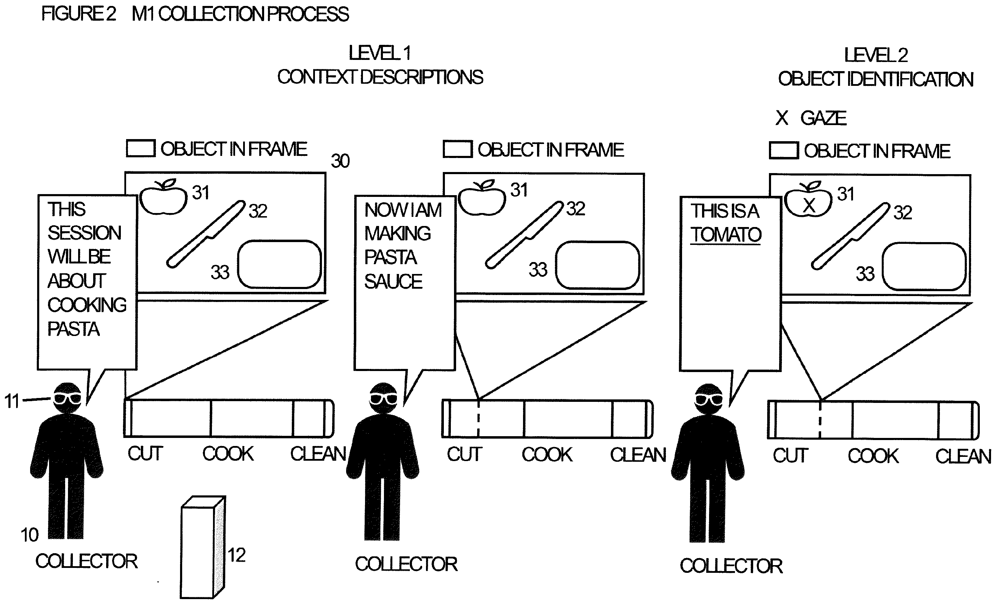

In a potential implementation, at least one computing device may be used which may comprise one or more components, such as one or more microprocessors, e.g., in local, mobile and/or distributed configuration. For example, the at least one computing device may comprise a wearable device, such as wearable glasses 11 having one or more microprocessors for processing data, e.g., in combination with a local and/or remote computer 12, such as, a personal computer or server computer, which communicates in wired or wireless manner with the wearable device 11 (as described in more detail below with reference to Fig. 2). The wearable glasses 11 is worn by the user while looking at the scene of the real environment, as described herein further below. The at least one computing device 11, 12 and/or some of the data sources used (like one or more sensors) may be implemented in software and/or hardware, in discrete or distributed manner, in any appropriate processing device, such as, in one or more microprocessors of a local device, e.g., of a mobile or wearable computer system and/or of one or more server computers accessible through local network(s) and/or the internet.

Unless stated otherwise, a component such as a processor described as being configured to perform a task may be implemented as a general component that is temporarily configured to perform the task at a given time or a specific component that is manufactured to perform the task. As used herein, the terms processor, processing device or computing device respectively refer to one or more devices, circuits, microprocessors, servers and/or processing cores configured to process data, such as computer program instructions.

The method according to aspects of the invention, which is implemented by at least one computing device or computer system or computer apparatus (schematically indicated at 11, 12), involves receiving, by the at least one computing device 11, 12, sensor data from one or more sensors, according to embodiments from more than one sensor (also called multisensor data), including receiving at least one image of a scene of a real environment captured by an image sensor, such as a digital camera (not explicitly shown as it is, e.g., implemented in the wearable glasses 11 illustrated in Fig. 2, as also described in more detail below). In one implementation, the at least one image may comprise multiple images, e.g., at discrete time instances, or may comprise multiple images in the form of a stream of images, e.g., a video stream.

The method further involves receiving, by the at least one computing device, audio data from the user detected by at least one audio sensor and gaze tracking data of the user detected by at least one human gaze tracking sensor while capturing the at least one image by the user. In one implementation, the at least one audio sensor (such as, one or more microphones) is implemented in the wearable glasses 11, or is a separate device. The at least one human gaze tracking sensor may be implemented as or comprise, for example, a sensor like a camera for sensing collector eye-gaze (e.g., corneal reflection, stereo geometry, eye orientation, and/or movement). In one implementation, the at least one human gaze tracking sensor is also implemented in the wearable glasses 11, or is a separate device.

A described implementation of the invention is multi-sensor data collection and processing, e.g., to facilitate simpler, faster, and more consistent annotation by a human Annotator. The inventors have found that average key frame annotation time can be decreased, and consistency improved, by providing efficient instructions to Collectors and guidance signals to human Annotators. Specifically, aside from providing an initial, deep-learning model-derived object mask to be verified and refined by the human Annotator, the invention as described herein leverages guidance signals of Audio-Visual (AV) Ground Truth and Ranked OoI list to greatly enhance the process.

Module M1 - Data collection:

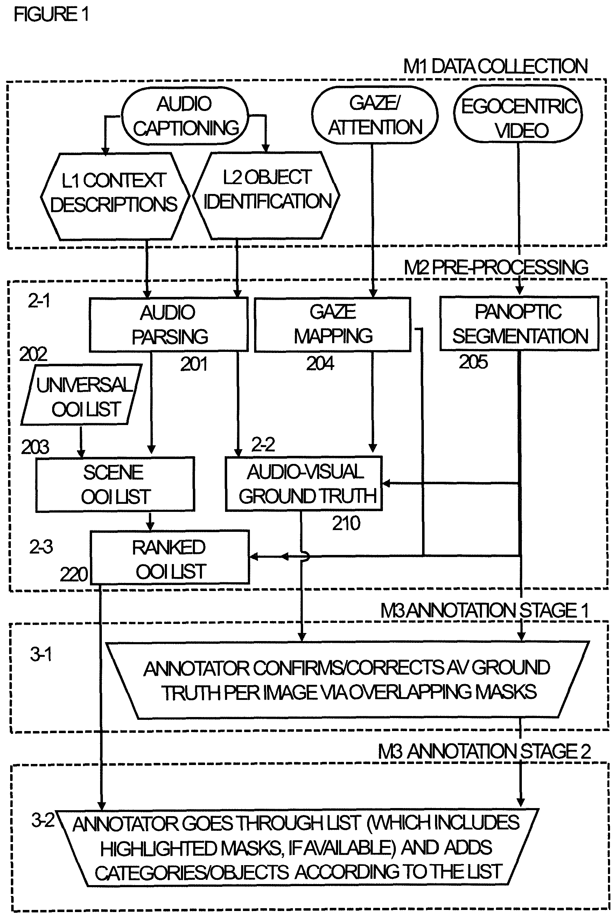

Now referring in more detail to Fig. 1, a first module (designated as module M1) comprises data collection. Particularly, multi-sensor data is collected by a human Collector 10 (cf. Fig. 2) wearing a hardware device, in this implementation equipped with multiple sensors including a world-facing video-camera, a Collector-facing video camera to capture gaze direction (and potentially attention through, e.g., pupillary dilation), and an audio recorder to record voice. Such a sensor stack is quite ubiquitous, for example, in the field of AR. As such, in one implementation, the collection process adapts to most currently available collection devices.

In one implementation, during data collection, the at least one computing device provides instructions to the human Collector via, e.g., display or audible signals, to perform, for example, two levels of articulation and audio captioning using code words (preferably simple code words; underlined in the following examples):

Level 1 (L1): Context descriptions (specific phrases):

For example, at the beginning of the activity, the Collector articulates "this session will be about cooking pasta." According to another example, the Collector articulates during the activity, to introduce a task or sub-action, "now I am cutting tomatoes"; "now I am pouring milk". These strings of words are captured by the audio sensor to retrieve and organize context information.

Level 2 (L2): Object identification (specific phrase in combination with gaze):

For example, before or during interaction with an object, the Collector articulates "this is a tomato". Again, this string of words is captured by the audio sensor. For this level, the Collector is instructed by the at least one computing device via, e.g., display or audible signals, to look at the OoI as he/she says what it is.

Fig. 2 shows an exemplary scenario in an exemplary use case of OoI enhancements and guidance signals regarding a potential collection process for a scene of "cooking pasta". Such objects of interest could be of use in an AR application, for example, in which a user wearing semi-transparent glasses is instructed by virtual objects blended into the view of the real environment as to which steps are to be taken for cooking pasta. Such AR application may use an image-based machine learning model, which has been trained accordingly with annotated datasets, as set out herein, so that the virtual objects in the AR application are blended into the right context.

Fig. 2 shows an example of an image frame 30 captured by the image sensor of the wearable glasses 11 with potential objects of interest while the user (here: Collector) is looking at the scene of the real environment, with potential objects of interest in the present example being a tomato 31, a knife 32, and a cutting board 33. As set out above, at the beginning of the activity, the Collector articulates "this session will be about cooking pasta" and "now I am making pasta sauce", which is parsed in stage 2-1 (described in more detail below) in the audio parsing 201. While articulating "this is a tomato", the Collector stares at the tomato 31 depicted in the image frame (illustrated in Fig. 2 with the "x") which is detected by the gaze tracking sensor of the wearable glasses 11 and processed in stage 2-1 in the gaze mapping 204.

Module M2 - Pre-Processing:

Referring to Fig. 1 again, a second module (designated as module M2) of the method comprises pre-processing. After raw multisensor data has been collected, it is pre-processed before presentation during the annotation stage. In one implementation, the second module M2 comprises Stage 2-1 and/or Stage 2-2.

Stage 2-1: Prepare audio, gaze, and egocentric video

A: Audio parsing:

In processing stage 2-1, the method according to aspects of the invention is performing, by the at least one computing device as described above (e.g. wearable glasses 11 and/or computer 12), or a different computing device, an audio parsing process 201 parsing at least part of the received audio data from the user into text format and generating a set of terms determined in the parsing process indicative of a user's articulated task or activity while operating the image sensor.

In one implementation, the audio or speech data can be parsed into text format through speech-to-text models, which are well established and readily available as out-of-the box solutions. Parsing results in (i) word lists that can be leveraged for suggestion of Scene OoI through predefined tables or taxonomy queries (from Level 1 of audio captioning) and (ii) object identification for establishing an Audio-Visual (AV) Ground Truth (from Level 2 of audio captioning).

In a next step, the method according to aspects of the invention is performing, by the at least one computing device as described above (e.g. wearable glasses 11 and/or computer 12), or a different computing device, pre-allocation of objects of interest from the generated set of terms determined in the parsing process, associating a probability with each of the pre-allocated objects of interest, and generating a scene objects of interest (OoI) list associated with the at least one image comprising a respective object category and associated probability for each of the pre-allocated objects of interest. Particularly, in one implementation, the following is performed.

(i) Scene OoI List

Predefined tables: In its simplest embodiment, keywords can be used to query predefined tables representing the likelihood of certain objects being present in a given video scene (search engine function). Thus, this comprises a context-based approach to suggesting Objects of Interest, as determined by their belonging to task-specific object groups. The principle behind this engine is a probabilistic mapping between activity and sets of objects, so that, for any given activity, there are sets of objects that are likely to be found in the vicinity of someone performing this activity, and hence will be suggested to the Annotator.

For example, parsed vocabulary is indicative of a certain task/activity, such as "brewing coffee", and said task/activity has been pre-allocated a defined set of Objects of Interest, like: coffee maker; coffee pot; water; coffee filter; coffee beans; ground coffee.

Objects of Interest forecasting: A further aspect of the invention comprises the learning of probabilities between activities and objects, e.g., based on a deep learning model. In such implementation, a model may predict what the present objects will be and with what probability based on the identified activity. This could even incorporate a time element as the frames progress, so that the probability of finding a particular object increases/decreases over time.

Either way, the result of this stage is the provision of a so-called Scene OoI List 203. In one implementation, the resulting Scene OoI List can be supplemented by a Universal OoI list 202 (see in more detail below).

(ii) Object Identification

Parsing of Level 2 audio captioning may also be used to generate a list of "Ground Truth" objects that are present in the scene, e.g., "this is a tomato/knife/cutting board/grater". Objects can thus be identified directly (see Stage 2-2 for more detail).

B: Gaze Mapping

At stage 2-1, the method according to aspects of the invention further comprises gaze mapping 204 with generating a gaze heatmap from the received gaze tracking data. Particularly, human gaze has a strong connection to the underlying cognitive and attentional processes that drive it. These processes aim to maximize the amount of information extracted from a scene, partly by directing gaze fixation (where the eyes stop to look) and partly by modulating attention, which is reflected in the amount of pupil dilation.

By, e.g., tracking eye movement and pupil dilation, an eye-fixation map or "heatmap" can be generated by accumulating the gaze positions on the image or video frame being looked at (effectively as a 2-dimensional histogram) and weighing each point by the amount of pupil dilation. This map then directly highlights potential Objects of Interest from a cognitive and attentional perspective.

C: Egocentric Image/Video

At stage 2-1, the method according to aspects of the invention further comprises panoptic segmentation 205, which comprises in particular processing at least part of the at least one image through a panoptic segmentation model and generating a set of segmentation masks, each segmentation mask of the set of segmentation masks having a respective assigned object category and panoptic segmentation confidence. In particular, e.g., after standardization of received data items, image or video data are processed through a panoptic segmentation model. In one implementation, the model performs two tasks: it creates masks for foreground objects in the scene so they can be separated from each other (instance segmentation), and it assigns an object category to preferably each of these masks (semantic segmentation). Preferably, such a model is created by training on large quantities of annotated video data, making the model robust to multiple visual scenarios. The masked items represent potential Objects of Interest and their respective categories.

D: Universal OoI

The Scene OoI List 203 contains OoI directly related to the task at hand. However, in some instances, there may be also items that are of general and almost universal relevance in contemporary human life. Such items can be classified as "Universal OoI", wherein such list can comprise, e.g., "wallet", "mobile phone", "glasses", "key", and "headphones". This Universal OoI list 202 may optionally be used to enrich or augment the Scene OoI List in accordance with a respective definition of OoI. The Universal OoI list 202 is a list of universal objects of interest not processed from the at least one image.

Stage 2-2: Audio-Visual Ground Truth

In a further aspect of the invention, by combining gaze/fixation on an object with audio captioning (e.g., Level 2 audio captioning described in Module 1), an "Audio-Visual ("AV") Ground Truth" 210 is established for the respective object. For example, a trained human Collector stares at a tomato while saying, "this is a tomato."

In particular, the generated AV Ground Truth comprises location information and a respective object category for at least one object of the respective captured image from the parsed audio data and gaze heatmap. These AV Ground Truths are matched with the spatially corresponding mask from the panoptic segmentation and its associated category. In particular, this comprises matching the generated AV Ground Truth with a spatially corresponding segmentation mask of the generated set of segmentation masks and its assigned object category. As a result of this process, at least one dataset of the AV Ground Truth is generated which comprises one or more data labels indicative of the respective object category and the matched segmentation mask. Such generated dataset is configured and appropriate for being used for input to a computer-implemented process for annotating at least one image frame of a scene of a real environment for input to and training at least one image-based machine learning model.

Stage 2-3: Ranked OoI List

In a further aspect of the invention, additionally or alternatively to Stage 2-2 and the generation of AV Ground Truth, at least one dataset comprising a set of ranked objects of interest is derived. Such set of ranked objects of interest or list of ranked objects of interest ("Ranked OoI List") 220 comprises objects of interest ranked according to at least one aggregated score which is determined based on the generated Scene OoI List, the generated heatmap and generated set of segmentation masks. Such generated dataset is configured and appropriate for being used for input to a computer-implemented process for annotating at least one image frame of a scene of a real environment for input to and training at least one image-based machine learning model.

In particular, determining an aggregated score is based on the following information sources:

- Scene OoI probability (from Scene OoI List)
- Gaze "heat"
- Panoptic segmentation confidence ("PS Confidence")

Such determined score combines the multiple sources of information available for annotation to suggest the OoI that are most likely to be present in the scene, even if they are not included in the panoptic segmentation prediction and/or AV Ground Truth. In one implementation, the results are presented as a list of objects paired with an aggregated score, e.g. in descending order where a higher score means a higher probability of the object being an OoI in the scene.

There are effectively three types of sources:

1) Location only: information that is associated to locations in the image, but not to a category, i.e., gaze.
2) Category only: information that is associated with a particular object category, but not to any given location in the image, i.e., Scene OoI List.
3) Combined: information associated both to categories and locations in space, i.e., the panoptic segmentation masks.

Intuitively, objects that appear in all sources will likely be more relevant, so in one implementation the first step of the ranking is to match the categories present on the Scene OoI List with the ones from the panoptic segmentation. The same can be done between the segmentation masks from the panoptic segmentation and the respective gaze heatmap. The aggregated score for these objects ("OoI Score") is, in one implementation, the weighted sum of (i) object probability for that particular category, (ii) the gaze heat for the corresponding mask, and (iii) the PS Confidence.

In a second step, other modality combinations are assessed. Namely, object categories not found in the segmentation output, but with high Scene OoI probability, receive a score based on this probability multiplied by the weight used in the score above. For example, regions with high gaze heat are assigned a generic label ("Gaze ROI-A", "-B", ...) and added to the list associated with their weighted score. The same may be done with segmentation results absent in the Scene OoI List and/or in the respective heatmap.

In a final step, the suggested objects are then ranked by their OoI Score, which, as described above, can be viewed as the probability that a particular object is an OoI in the scene.

OoI Score - Example for an AR application "Cooking Pasta":

The Table 1 below shows an exemplary OoI Score for a simple example based on the cooking scene as depicted in Figure 2.

The OoI Score was calculated as shown in Equation 1 below:

$$s_{ooi} = w_{op} \, p_{op} + w_g g + w_c c \qquad\qquad \text{Eq.1}$$

Where $s_{ooi}$ is the OoI score, $p_{op}$ is the Scene OoI probability, $g$ is the gaze heat, $c$ is the panoptic segmentation confidence and $w_{op}$ $w_g$ $w_c$ are the weight factors for each respective metric normalized to one.

Table 1: Example computation of a Ranked OoI List.

| Object | Scene OoI probability | Gaze "heat" | PS Confidence | OoI Score |
|---|---|---|---|---|
| Knife | 0.60 | 0.70 | 0.80 | **0.70** |
| Garlic | 0.10 | 0.90 | 0.90 | **0.63** |
| "Gaze ROI - A" | 0.0 | 0.95 | 0.0 | **0.32** |
| Tomato | 0.87 | 0.0 | 0.0 | **0.29** |
| Cutting board | 0.75 | 0.0 | 0.0 | **0.25** |
| | | | | |
| Pasta | 0.66 | 0.0 | 0.0 | **0.22** |
| Sword | 0.0 | 0.0 | 0.40 | **0.13** |

In this example, the OoI Score is computed as a weighted average with uniform weights of 1/3 for each of the three score components (Scene OoI probability, gaze heat, PS Confidence). In one implementation, as explained further below, "Tomato" and "Garlic" will be corrected in annotation stage 3-1 (AV Ground Truth that was checked against a panoptic segmentation mask) and will therefore be excluded from the table.

In a further aspect, the invention also provides a computer-implemented method of annotating at least one image frame of a scene of a real environment which is configured for input to and training at least one machine learning model, an embodiment of which is also shown in Fig. 1 according to Module M3.

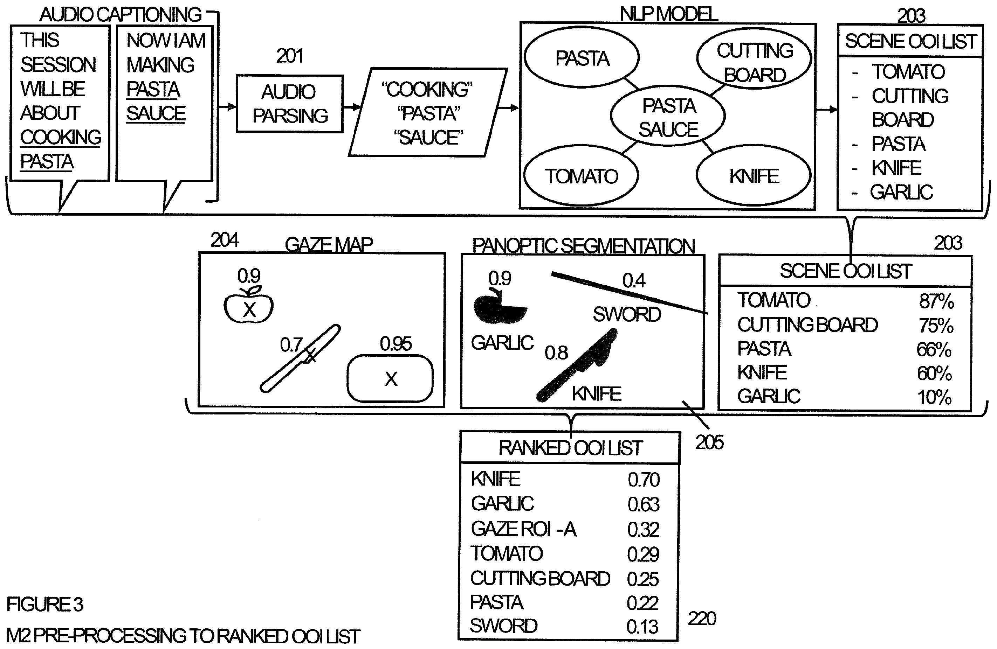

Fig. 3 shows an exemplary pre-processing scheme to obtain a ranked OoI list 220 based on gaze, panoptic segmentation and parsing the audio into a Scene OoI List according to the example as shown in relation to Fig. 2., and with exemplary probability values as described above in Relation to Table 1. In the audio parsing 201, a natural-language processing (NLP) model may generate the terms, for example, "Pasta", "Cutting board", "Garlic", "Tomato" and "Knife" from the Collector's articulated phrases during audio captioning described above. The generated terms are determined by the NLP model (e.g., which may have been previously trained accordingly) to be in context with "cooking pasta" and "pasta sauce". From the NLP model, the exemplary Scene OoI List 203 is generated.

Module M3 - Annotation:

An annotation process according to an aspect of the invention comprises one, or both, of Stages 3-1 and 3-2 per image frame to be annotated. In an implementation in which the annotation process comprises both Stages 3-1 and 3-2 per image frame, the Annotator first encounters Stage 3-1 and only progresses to Stage 3-2 once Stage 3-1 is done. After Stage 3-2 is done, the image frame can be considered fully annotated, and the Annotator can move to the next frame.

Stage 3-1 - Confirming AV Ground Truth

In the first stage of annotation, the human Annotator confirms or corrects the segmentation output associated with each available AV Ground Truth (as described in Stage 2-2). In particular, the Annotator is presented with two sources of information:

1) The annotation extracted from the AV audio component, paired with the region in the image that was gazed at during the recording of that annotation.
2) The category and mask produced by the panoptic segmentation model that overlaps spatially with the AV annotation.

Based on these two sources, the Annotator checks if the segmentation mask and category are correct for each of the AV annotations. If there are errors in the masks or masks are not available, the Annotator corrects the masks by re-assigning errant pixels in the corresponding masks, creates new masks or erases spurious masks. If the categories are wrong, the Annotator corrects the labels. Once all AV Ground Truth annotations have been corrected, the Annotator moves onto stage 3-2, if present, or to the next frame correspondingly.

Following the "cooking pasta" scenario, the Collector recorded AV Ground Truth annotations for the "tomato", so the Annotator is presented with the category label extracted from the audio component along with the gaze location during that annotation. At the same time, the panoptic segmentation category and mask that overlap with that annotation are displayed, and the Annotator then confirms or corrects the AV category label and panoptic segmentation mask accordingly.

Stage 3-2 - Ranked OoI Review

In a second stage of annotation, based on the Ranked OoI List 220 the human Annotator is presented with the Ranked OoI List 220, preferably with only those objects not present in the AV Ground Truth if Stage 3-1 is included in the particular pipeline embodiment . Features with high Scene OoI probability, gaze heat, and PS Confidence score higher. Less likely features score progressively lower (as described in Stage 2-3). According to the invention, and as opposed to other known methods, objects that went undetected by the human Collector (not seen and not commented upon) are still listed for the Annotator's review if they are task- or universally relevant. The Annotator goes through the displayed Ranked OoI List, which is supplemented by highlighted masks when available, and adds or corrects (refines) object category and/or object masks according to the particular case (see differences in presentation in Stage 2-3).

By the end of Stage 3-2, the Annotator will have gone through all likely OoI in the current image frame without having to make judgements out of context, but instead informed by the context and experiences of the data Collector, which is the operator performing the task.

Video Annotation

The method according to aspects of the invention is appropriate to be applied to image streams, like videos, even while annotating on still images. This is accomplished by aggregating temporal information from multiple frames into the key frames that are annotated. This method relies on the fact that scenes containing more OoI will lie in the field of view for longer, so a computational system can aggregate the AV Ground Truths into a single frame (for Stage 3-1), and also the information for the Ranked OoI List (Stage 3-2), therefore minimizing the total number of frames that need to be annotated while still covering all OoI in the scene. Spacing and frequency of key frames can be adjusted to the video- and propagation method- quality. Accordingly, if the at least one image captured in the data collection is a part of a video stream, the at least one image frame (e.g., key frame) to be annotated may correspond to an image captured by the image sensor in module M1 which is preceding or succeeding the at least one image captured in module M1 and pre-processed in module M2.

Annotation - Example "Cooking Pasta"

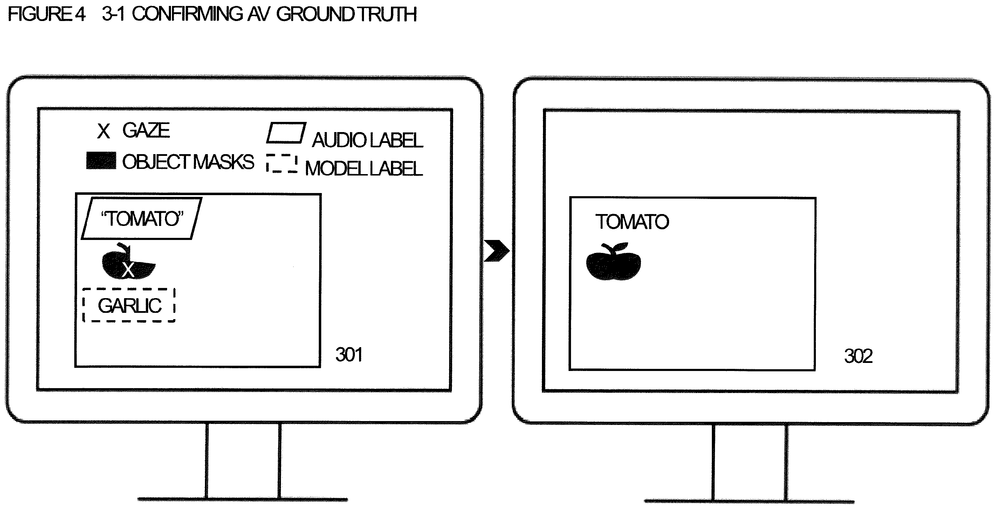

Fig. 4 illustrates an embodiment for Stage 3-1, confirming AV Ground Truth. According to Fig. 4, at least one computing device, such as a personal computer having a display device, is receiving at least one image frame 301 of a scene of a real environment to be annotated and provides the at least one image frame to the display device for presenting to a user (here: Annotator). The computer further receives at least one dataset of an audio-visual ground truth generated according to Stage 2-2 as described above. In principle, any ground truth generated by a different scheme than at Stage 2-2 may also be appropriate. In the present example, the annotator is presented with a segmentation mask ("object mask") labelled "Garlic" determined by the panoptic segmentation model in the panoptic segmentation 205 which overlaps with the AV annotation "Tomato" from the audio parsing 201 in an overlapping manner with the image frame 301.

The computer then receives instructions from the Annotator instructing the computer to add or refine one or more of the presented object categories and segmentation masks to the image frame 301. In the present example, the Annotator confirms the object category "Tomato" and refines/corrects the segmentation mask previously labelled "Garlic" to (at least more closely) cover the "tomato", as depicted in annotated image frame 302. The image frame is then augmented with corresponding annotation information to at least one annotated dataset configured for input to and training at least one machine learning model. In another example (not shown) where the segmentation mask and/or object category has been determined correctly by the panoptic segmentation 205, the Annotator confirms the audio-visual ground truth by confirming one or more of the respective object category and presented segmentation mask.

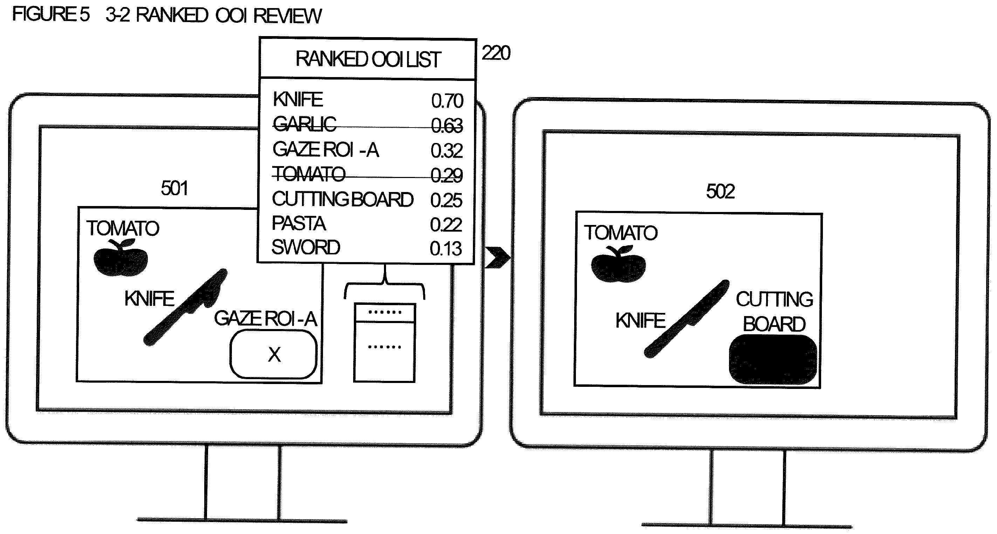

Fig. 5 shows an embodiment for Stage 3-2, illustrating a ranked OoI review, in relation to the example of the AR application of "cooking pasta".

According to Fig. 5, at least one computing device, such as a personal computer having a display device, is receiving at least one image frame 501 of a scene of a real environment to be annotated and provides the at least one image frame to the display device for presenting to a user (here: Annotator). The computer also receives at least a part of a set of ranked objects of interest (here: the Ranked OoI List 220) provided at Stage 2-3. At least a portion of the Ranked OoI List 220 is presented on the display device while displaying the at least one image frame 501 to be annotated on the display device.

The annotation task that is first presented to the Annotator with the Ranked OoI List 220 is the object with the highest score, i.e., "tomato". If the information from Stage 3-1 is included and "tomato" has been confirmed as AV Ground Truth, the annotation task that is first presented to the Annotator with the Ranked OoI List 220 is the object with the highest score, i.e., "knife", not present in the AV Ground Truth. The respective object is associated with a segmentation mask and object category proposal from the panoptic segmentation model and the Annotator is asked to refine the proposed annotations.

For the next element in the Ranked OoI List 220, a region of interest (ROI) originating from the heatmap ("Gaze ROI - A"), the Annotator is presented with the highlighted ROI in the respective image frame. For the task, the Annotator is instructed by the computing device to create a segmentation mask, in this case the "cutting board", and finds the matching object category label from the quick selection in the Ranked OoI List 220 (with the associated score indicating a high probability). As a result, the "cutting board" entry is blacked out and considered done (cf. annotated image frame 502).

The last two elements are rejected by the human Annotator as they either are not contained in the image frame 501 ("pasta") or an incorrect mask proposal by the panoptic segmentation model ("sword").

The Annotator (via the computer) then adds or refines, respectively, the respective object categories and/or segmentation masks to the at least one image frame and augments the at least one image frame with corresponding annotation information to at least one annotated dataset configured for input to and training at least one machine learning model.

According to aspects of the invention, therefore, the provision of what qualifies as an object of interest and can be presented to a human annotator for annotation and training an image-based machine learning model is customized for solving the difficulties of large-scale image or video annotation, in particular, for task-specific, image-based machine learning model training.

The definitional approach to OoI according to the invention encompasses those objects in one or more of the following categories:

    1) objects that are relevant to the task at hand (context relevance);
    2) objects that are salient (high contrast); and/or
    3) objects that are on a list of Universal OoI (ubiquitous relevance).

The method according to the invention is devised to automate a decision-making process as to what qualifies as OoI and what does not. Specifically, the method reduces the human Annotator's range of choice and thus cuts down on ambiguity and deliberation time when determining which objects in a given image frame or key frame of a video stream are OoI. Only the objects relevant to the annotation task at hand are annotated. By reducing the Annotator's mental load and their arbitrary choices through guidance signals, the method can improve the quality and speed of task-specific annotation, and thus effectively train an image-based machine learning model and improve a potential implementation thereof, such as in an application of AR or autonomous driving.

A particular aspect of the approach according to the invention relates to the collection of (multisensor) egocentric data. A solution is provided for Collector-assisted OoI image or video annotation, leveraging the top-down or goal-oriented cognitive processing of the Collector. Specifically, Collectors may be instructed in how to provide custom audio captioning and object selection through focused fixation. The Collectors are the ones that define what the OoIs are, as they are the ones performing the task and interacting with the actual scene, and that information is then processed through Module M2 and transformed into guidance signals for the human Annotator. Therefore, the annotation process according to the invention is unique in that it establishes a bridge between Collector and Annotator, providing both task and scene context by leveraging existing sensors for higher quality annotations.

## Claims

1. A computer-implemented method of generating at least one dataset associated with one or more objects of at least one image of a scene of a real environment configured for input to a computer-implemented process for annotating at least one image frame of a scene of a real environment for input to and training at least one machine learning model, the method comprising:

   receiving (M1), by at least one computing device, at least one image (30) of a scene of a real environment captured by an image sensor operated by a user;
   receiving (M1), by the at least one computing device, audio data from the user (10) detected by at least one audio sensor and gaze tracking data of the user (10) detected by at least one human gaze tracking sensor while capturing the at least one image (30) by the user,
   performing (2-1), by at least one computing device, an audio parsing process (201) parsing at least part of the received audio data from the user (10) into text format and generating a set of terms determined in the parsing process (201) indicative of a user's articulated task or activity while operating the image sensor,
   pre-allocating (2-1) objects of interest from the generated set of terms determined in the parsing process (201), associating a probability with each of the pre-allocated objects of interest, and generating a scene objects of interest list (203) associated with the at least one image (30) comprising a respective object category and associated probability for each of the pre-allocated objects of interest,
   generating (2-1) a gaze heatmap (204) from the received gaze tracking data,
   processing at least part of the at least one image (30) through a panoptic segmentation model and generating a set of segmentation masks (205), each segmentation mask of the set of segmentation masks having a respective assigned object category and panoptic segmentation confidence,
   generating (2-3) at least one dataset comprising a set of ranked objects of interest (220) with objects of interest ranked according to at least one aggregated score determined based on the generated scene objects of interest list (203), the generated heatmap (204) and generated set of segmentation masks (205), configured for input to a computer-implemented process for annotating (3-2) at least one image frame (501) of a scene of a real environment for input to and training at least one machine learning model.

2. The method according to claim 1, wherein the set of ranked objects of interest (220) is configured to be used in a computer-implemented process for annotating (3-2) at least one image frame (501) of a scene of a real environment for input to and training at least one machine learning model of an augmented reality application.

3. The method according to one of claims 1 or 2, further comprising
   providing a list of universal objects of interest (202) not processed from the at least one image (30), and augmenting the scene objects of interest list (203) with the list of universal objects of interest.

4. The method according to one of claims 1 to 3, further comprising

   generating (2-2) an audio-visual ground truth (210) comprising an object category and respective location information for at least one object of the at least one image (30) from the received audio data and gaze tracking data of the user, and
   matching (2-2) the generated audio-visual ground truth (210) with a spatially corresponding segmentation mask of the generated set of segmentation masks (205) and its assigned object category.

5. The method according to one of claims 1 to 4, wherein the at least one aggregated score is determined based on a weighted sum of (i) the probability of the respective object of interest contained in the scene objects of interest list (203), (ii) the respective gaze heat for the corresponding segmentation mask having an object category corresponding to the respective object of interest, and (iii) the respective panoptic segmentation confidence of the corresponding segmentation mask having an object category corresponding to the respective object of interest.

6. The method according to one of claims 1 to 5, wherein determining the at least one aggregated score comprises:

   matching object categories included in the scene objects of interest list (203) with respective object categories of the generated set of segmentation masks (205), and
   matching of segmentation masks of the generated set of segmentation masks (205) and the gaze heatmap (204), wherein optionally determining the at least one aggregated score comprises assigning a score from the scene objects of interest list (203) to a respective object category which could not be matched to an object category of the generated segmentation masks (205).

7. The method according to claim 6, further comprising adding at least one region of interest originating from the gaze heat above a predetermined threshold that was not matched to a generated segmentation mask to the scene objects of interest list (203), wherein the at least one region of interest is assigned an undefined object category.

8. A computer-implemented method of generating at least one dataset associated with one or more objects of at least one image of a scene of a real environment configured for input to a computer-implemented process for annotating at least one image frame of a scene of a real environment for input to and training at least one machine learning model, the method comprising:

   receiving (M1), by at least one computing device, at least one image (30) of a scene of a real environment captured by an image sensor operated by a user;
   receiving (M1), by the at least one computing device, audio data from the user (10) detected by at least one audio sensor and gaze tracking data of the user detected by at least one human gaze tracking sensor while capturing the at least one image (30) by the user (10),
   performing (2-1), by at least one computing device, an audio parsing process (201) parsing at least part of the received audio data from the user and generating parsed audio data indicative of a user's articulated task or activity or an object of interest of the scene while operating the image sensor,
   generating (2-1) a gaze heatmap (204) from the received gaze tracking data,
   processing (2-1) at least part of the at least one image (30) through a panoptic segmentation model and generating a set of segmentation masks (205), each segmentation mask of the set of segmentation masks having a respective assigned object category,
   generating (2-2) an audio-visual ground truth (210) comprising location information and a respective object category for at least one object of the at least one image (30) from the parsed audio data (201) and gaze heatmap (204), and
   matching the generated audio-visual ground truth (210) with a spatially corresponding segmentation mask of the generated set of segmentation masks (205) and its assigned object category, and generating at least one dataset of the audio-visual ground truth (210) comprising at least one data label indicative of the respective object category and the matched segmentation mask, the generated at least one dataset configured for input to a computer-implemented process for annotating (3-1, 3-2) at least one image frame (301) of a scene of a real environment for input to and training at least one machine learning model.

9. The method according to one of claims 1 to 8, wherein the image sensor and optionally the human gaze tracking sensor are part of a wearable computing device (11), particularly of wearable glasses, worn by the user while looking at the scene of the real environment.

10. A computer-implemented method of annotating at least one image frame (501) of a scene of a real environment configured for input to and training at least one machine learning model, the method comprising:

   receiving, by at least one computing device, at least one image frame (501) of a scene of a real environment to be annotated and providing the at least one image frame to a display device for presenting to a user;
   receiving, by the at least one computing device, at least a part of a set of ranked objects of interest (220) provided according to a method of one of the claims 1 to 7 or 9,
presenting at least a portion of the received set of ranked objects of interest (220) on the display device while displaying the at least one image frame (501) to be annotated on the display device,
receiving instructions from a human annotator instructing the at least one computing device to add or refine one or more of the object categories or segmentation masks to the at least one image frame (501) and augmenting the at least one image frame with corresponding annotation information to at least one annotated dataset (502) configured for input to and training at least one machine learning model.

11. The method according to claim 10, wherein the at least one portion of the set of ranked objects of interest (220) is presented on the display device after receiving instructions from the annotator instructing the at least one computing device to confirm or correct (3-1) any stored audio-visual ground truth (210),
wherein optionally the at least one portion of the set of ranked objects of interest (220) presented on the display device comprises only objects of interest which are not included in the confirmed or corrected audio-visual ground truth (210).

12. A computer-implemented method of annotating at least one image frame (301) of a scene of a real environment configured for input to and training at least one machine learning model, the method comprising:

receiving, by at least one computing device, at least one image frame (301) of a scene of a real environment to be annotated and providing the at least one image frame to a display device for presenting to a user;
receiving, by the at least one computing device, at least one dataset of an audio-visual ground truth (210) generated according to a method of one of the claims 8 or 9,
receiving instructions from a human annotator instructing the at least one computing device to add or refine one or more of the respective object categories and segmentation masks to the at least one image frame (301) and augmenting the at least one image frame with corresponding annotation information to at least one annotated dataset (302) configured for input to and training at least one machine learning model.

13. The method according to claim 12, further comprising

presenting one or more segmentation masks of the set of segmentation masks (205) on the display device in an overlapping manner with the at least one image frame (301),
receiving instructions from the annotator instructing the at least one computing device to confirm or correct the at least one dataset of an audio-visual ground truth (210) by confirming or refining one or more of the respective object category and presented segmentation mask.

14. The method according to one of claims 10 to 13, wherein the at least one image frame (301, 501) corresponds to the at least one image (30) captured by the image sensor or, if the at least one image (30) is a part of a video stream, corresponds to an image captured by the image sensor preceding or succeeding the at least one image (30) captured by the image sensor.

15. A computer program comprising instructions which, when the program is executed by at least one computing device, cause the at least one computing device to carry out the method of one of the preceding claims.

**Patentansprüche**

1. Computerimplementiertes Verfahren zur Erzeugung mindestens eines Datensatzes, der einem oder mehreren Objekten mindestens eines Bildes einer Szene einer realen Umgebung zugeordnet ist und zur Eingabe in einen computerimplementierten Prozess zum Annotieren mindestens eines Einzelbildes einer Szene einer realen Umgebung zur Eingabe in mindestens ein Maschinenlernmodell und zum Trainieren desselben ausgelegt ist, wobei das Verfahren aufweist:

Empfangen (M1), durch mindestens eine Recheneinrichtung, mindestens eines von einem von einem Benutzer bedienten Bildsensor aufgenommenen Bildes (30) einer Szene einer realen Umgebung;
Empfangen (M1), durch die mindestens eine Recheneinrichtung, von von mindestens einem Audiosensor detektierten Audiodaten von dem Benutzer (10) und von von mindestens einem Sensor zur Verfolgung von menschlichen Blicken detektierten Blickverfolgungsdaten des Benutzers (10), während das mindestens eine Bild (30) von dem Benutzer aufgenommen wird;
Durchführen (2-1), durch mindestens eine Recheneinrichtung, eines Audio-Parsing-Prozesses (201), der mindestens einen Teil der empfangenen Audiodaten von dem Benutzer (10) in ein Textformat parst, und Erzeugen eines in dem Parsing-Prozess (201) bestimmten Satzes von Begriffen, die eine artikulierte Aufgabe oder Aktivität des Benutzers während der Bedienung des Bildsensors angeben,

Vorabzuteilen (2-1) von Objekten von Interesse aus dem in dem Parsing-Prozess (201) bestimmten erzeugten Satz von Begriffen, Zuordnen einer Wahrscheinlichkeit zu jedem der vorab zugeteilten Objekte von Interesse und Erzeugen einer Liste (203) von Objekten von Interesse einer Szene, die dem mindestens einen Bild (30) zugeordnet ist und für jedes der vorab zugeteilten Objekte von Interesse eine jeweilige Objektkategorie und zugeordnete Wahrscheinlichkeit aufweist,

Erzeugen (2-1) einer Blick-Heatmap (204) aus den empfangenen Blickverfolgungsdaten,

Verarbeiten mindestens eines Teils des mindestens einen Bildes (30) durch ein Modell panoptischer Segmentierung und Erzeugen eines Satzes von Segmentierungsmasken (205), wobei jede Segmentierungsmaske des Satzes von Segmentierungsmasken (205) eine jeweilige zugewiesene Objektkategorie und eine Konfidenz panoptischer Segmentierung enthält,

Erzeugen (2-3) mindestens eines Datensatzes, der einen Satz von eingestuften Objekten von Interesse (220) enthält, wobei die Objekte von Interesse gemäß mindestens einem aggregierten Bewertungswert eingestuft werden, der auf der Grundlage der erzeugten Liste (203) von Objekten von Interesse einer Szene, der erzeugten Heatmap (204) und des erzeugten Satzes von Segmentierungsmasken (205) bestimmt wird, und zur Eingabe in einen computerimplementierten Prozess zum Annotieren (3-2) mindestens eines Einzelbildes (501) einer Szene einer realen Umgebung zur Eingabe in mindestens ein Maschinenlernmodell und zum Trainieren desselben ausgelegt ist.

2. Verfahren nach Anspruch 1, wobei der Satz von eingestuften Objekten von Interesse (220) dazu ausgelegt ist, in einem computerimplementierten Prozess zum Annotieren (3-2) mindestens eines Einzelbildes (501) einer Szene einer realen Umgebung zur Eingabe in mindestens ein Maschinenlernmodell einer Augmented-Reality-Anwendung und zum Trainieren desselben verwendet zu werden.

3. Verfahren nach einem der Ansprüche 1 oder 2, das ferner aufweist:
Bereitstellen einer Liste universeller Objekte von Interesse (202), die nicht aus dem mindestens einen Bild (30) verarbeitet werden, und Erweitern der Liste (203) von Objekten von Interesse einer Szene um die Liste von universellen Objekten von Interesse.

4. Verfahren nach einem der Ansprüche 1 bis 3, das aufweist:

Erzeugen (2-2) einer audiovisuellen Ground-Truth (210), die eine Objektkategorie und jeweilige Positionsinformationen für mindestens ein Objekt des mindestens einen Bildes (30) aufweist, aus den empfangenen Audiodaten und Blickverfolgungsdaten des Benutzers und

Herstellen einer Entsprechung (2-2) zwischen der erzeugten audiovisuellen Ground-Truth (210) und einer räumlich entsprechenden Segmentierungsmaske des erzeugten Satzes von Segmentierungsmasken (205) und ihrer zugewiesenen Objektkategorie.

5. Verfahren nach einem der Ansprüche 1 bis 4, wobei der mindestens eine aggregierte Bewertungswert auf der Grundlage einer gewichteten Summe aus (i) der Wahrscheinlichkeit, dass das jeweilige Objekt von Interesse in der Liste (203) von Objekten von Interesse einer Szene enthalten ist, (ii) der jeweiligen Blick-Heat für die entsprechende Segmentierungsmaske mit einer dem jeweiligen Objekt von Interesse entsprechenden Objektkategorie und (iii) der jeweiligen Konfidenz der panoptischen Segmentierung der entsprechenden Segmentierungsmaske mit einer dem jeweiligen Objekt von Interesse entsprechenden Objektkategorie bestimmt wird.

6. Verfahren nach einem der Ansprüche 1 bis 5, wobei das Bestimmen des mindestens einen aggregierten Bewertungswertes aufweist:

Herstellen einer Entsprechung zwischen Objektkategorien, die in der Liste (203) von Objekten von Interesse einer Szene enthalten sind, und jeweiligen Objektkategorien des erzeugten Satzes von Segmentierungsmasken (205), und

Herstellen einer Entsprechung zwischen Segmentierungsmasken des erzeugten Satzes von Segmentierungsmasken (205) und der Blick-Heatmap (204), wobei das optionale Bestimmen des mindestens einen aggregierten Bewertungswertes das Zuweisen eines Bewertungswertes aus der Liste (203) von Objekten von Interesse einer Szene zu einer jeweiligen Objektkategorie umfasst, für die keine Entsprechung mit einer Objektkategorie der erzeugten Segmentierungsmasken (205) hergestellt werden konnte.

**7.** Verfahren nach Anspruch 6, das ferner das Hinzufügen mindestens eines von der Blick-Heat stammenden Bereichs von Interesse, der über einem vorbestimmten Schwellenwert liegt, für den keine Entsprechung mit einer erzeugten Segmentierungsmaske hergestellt worden ist, zu der Liste (203) von Objekten von Interesse einer Szene aufweist, wobei dem mindestens einen Bereich von Interesse eine undefinierte Objektkategorie zugewiesen wird.

**8.** Computerimplementiertes Verfahren zur Erzeugung mindestens eines Datensatzes, der einem oder mehreren Objekten mindestens eines Bildes einer Szene einer realen Umgebung zugeordnet ist und zur Eingabe in einen computerimplementierten Prozess zum Annotieren mindestens eines Einzelbildes einer Szene einer realen Umgebung zur Eingabe in mindestens ein Maschinenlernmodell und zum Trainieren desselben ausgelegt ist, wobei das Verfahren aufweist:

Empfangen (M1), durch mindestens eine Recheneinrichtung, mindestens eines von einem von einem Benutzer bedienten Bildsensor aufgenommenen Bildes (30) einer Szene einer realen Umgebung;

Empfangen (M1), durch die mindestens eine Recheneinrichtung, von von mindestens einem Audiosensor detektierten Audiodaten von dem Benutzer (10) und von von mindestens einem Sensor zur Verfolgung von menschlichen Blicken detektierten Blickverfolgungsdaten des Benutzers, während das mindestens eine Bild (30) von dem Benutzer (10) aufgenommen wird;

Durchführen (2-1), durch mindestens eine Recheneinrichtung, eines Audio-Parsing-Prozesses (201), der mindestens einen Teil der empfangenen Audiodaten von dem Benutzer parst, und Erzeugen von geparsten Audiodaten, die eine artikulierte Aufgabe oder Aktivität des Benutzers oder ein Objekt von Interesse einer Szene während der Bedienung des Bildsensors angeben,

Erzeugen (2-1) einer Blick-Heatmap (204) aus den empfangenen Blickverfolgungsdaten,

Verarbeiten (2-1) mindestens eines Teils des mindestens einen Bildes (30) durch ein Modell panoptischer Segmentierung und Erzeugen eines Satzes von Segmentierungsmasken (205), wobei jede Segmentierungsmaske des Satzes von Segmentierungsmasken eine jeweilige zugewiesene Objektkategorie hat,

Erzeugen (2-2) einer audiovisuellen Ground-Truth (210), die Positionsinformationen und eine jeweilige Objektkategorie für mindestens ein Objekt des mindestens einen Bildes (30) aufweist, aus den geparsten Audiodaten (201) und der Blick-Heatmap (204), und

Herstellen einer Entsprechung zwischen der erzeugten audiovisuellen Ground-Truth (210) und einer räumlich entsprechenden Segmentierungsmaske des erzeugten Satzes von Segmentierungsmasken (205) und ihrer zugewiesenen Objektkategorie, und Erzeugen mindestens eines Datensatzes der audiovisuellen Ground-Truth (210) mit mindestens einer Datenkennzeichnung, die die jeweilige Objektkategorie und die Segmentierungsmaske, für die die Entsprechung hergestellt worden ist, angibt, wobei der erzeugte mindestens eine Datensatz zur Eingabe in einen computerimplementierten Prozess zum Annotieren (3-1, 3-2) mindestens eines Einzelbildes (301) einer Szene einer realen Umgebung zur Eingabe in mindestens ein Maschinenlernmodell und zum Trainieren desselben ausgelegt ist.

**9.** Verfahren nach einem der Ansprüche 1 bis 8, wobei der Bildsensor und optional der Sensor zur Verfolgung von menschlichen Blicken Teil einer am Körper tragbaren Computereinrichtung (11) ist, insbesondere einer am Körper tragbaren Brille, die von dem Benutzer getragen wird, während er die Szene der realen Umgebung betrachtet.

**10.** Computerimplementiertes Verfahren zum Annotieren mindestens eines Einzelbildes (501) einer Szene einer realen Umgebung, das zur Eingabe in mindestens ein Maschinenlernmodell und zum Trainieren desselben ausgelegt ist, wobei das Verfahren aufweist:

Empfangen, durch mindestens eine Recheneinrichtung, mindestens eines zu annotierenden Einzelbildes (501) einer Szene einer realen Umgebung und Liefern des mindestens einen Einzelbildes an eine Anzeigeeinrichtung zur Darstellung für einen Benutzer;

Empfangen, durch die mindestens eine Recheneinrichtung, mindestens eines Teils eines Satzes von eingestuften Objekten von Interesse (220), der gemäß einem Verfahren nach einem der Ansprüche 1 bis 7 oder 9 bereitgestellt wird,

Darstellen mindestens eines Teils des empfangenen Satzes von eingestuften Objekten von Interesse (220) auf der Anzeigeeinrichtung, während das mindestens eine zu annotierende Einzelbild (501) auf der Anzeigeeinrichtung angezeigt wird,

Empfangen von Anweisungen von einem menschlichen Annotator, die die mindestens eine Recheneinrichtung anweisen, eine oder mehrere der Objektkategorien oder Segmentierungsmasken zu dem mindestens einen Einzelbild (501) hinzuzufügen oder zu verfeinern, und Erweitern des mindestens einen Einzelbildes um entsprechende Annotationsinformationen zu mindestens einem annotierten Datensatz (502), der zur Eingabe in mindestens ein Maschinenlernmodell und zum Trainieren desselben ausgelegt ist.

11. Verfahren nach Anspruch 10, wobei der mindestens eine Teil des Satzes von eingestuften Objekten von Interesse (220) auf der Anzeigeeinrichtung dargestellt wird, nachdem Anweisungen von dem Annotator empfangen wurden, die die mindestens eine Recheneinrichtung anweisen, jegliche gespeicherte audiovisuelle Ground-Truth (210) zu bestätigen oder zu korrigieren (3-1),
wobei optional der mindestens eine auf der Anzeigeeinrichtung dargestellte Teil des Satzes von eingestuften Objekten von Interesse (220) nur Objekte von Interesse aufweist, die nicht in der bestätigten oder korrigierten audiovisuellen Ground-Truth (210) enthalten sind.

12. Computerimplementiertes Verfahren zum Annotieren mindestens eines Einzelbildes (301) einer Szene einer realen Umgebung, das zur Eingabe in mindestens ein Maschinenlernmodell und zum Trainieren desselben ausgelegt ist, wobei das Verfahren aufweist:

Empfangen, durch die mindestens eine Recheneinrichtung, mindestens eines zu annotierenden Einzelbildes (301) einer Szene einer realen Umgebung und Liefern des mindestens einen Einzelbildes an eine Anzeigeeinrichtung zur Darstellung für einen Benutzer;
Empfangen, durch die mindestens eine Recheneinrichtung, mindestens eines gemäß einem Verfahren nach einem der Ansprüche 8 oder 9 erzeugten Datensatzes einer audiovisuellen Ground-Truth (210),
Empfangen von Anweisungen von einem menschlichen Annotator, die die mindestens eine Recheneinrichtung anweisen, eine oder mehrere der jeweiligen Objektkategorien und Segmentierungsmasken zu dem mindestens einen Einzelbild (301) hinzuzufügen oder zu verfeinern, und Erweitern des mindestens einen Einzelbildes um entsprechende Annotationsinformationen zu mindestens einem annotierten Datensatz (302), der zur Eingabe in mindestens ein Maschinenlernmodell und Trainieren desselben ausgelegt ist.

13. Verfahren nach Anspruch 12, das ferner aufweist:

Darstellen einer oder mehrerer Segmentierungsmasken des Satzes von Segmentierungsmasken (205) auf der Anzeigeeinrichtung auf eine mit dem mindestens einen Einzelbild (301) überlappende Weise,
Empfangen von Anweisungen von dem Annotator, die die mindestens eine Recheneinrichtung anweisen, den mindestens einen Datensatz einer audiovisuellen Ground-Truth (210) zu bestätigen oder zu korrigieren durch Bestätigen oder Verfeinern einer oder mehrerer der jeweiligen Objektkategorien und der dargestellten Segmentierungsmaske.

14. Verfahren nach einem der Ansprüche 10 bis 13, wobei das mindestens eine Einzelbild (301, 501) dem mindestens einen von dem Bildsensor aufgenommenen Bild (30) entspricht oder, wenn das mindestens eine Bild (30) Teil eines Videostreams ist, einem von dem Bildsensor aufgenommenen Bild entspricht, das dem mindestens einen von dem Bildsensor aufgenommenen Bild (30) vorhergeht oder darauf folgt.

15. Computerprogramm, das Anweisungen enthält, die, wenn das Programm von mindestens einer Recheneinrichtung ausgeführt wird, veranlassen, dass die mindestens eine Recheneinrichtung das Verfahren nach einem der vorhergehenden Ansprüche ausführt.

**Revendications**

1. Procédé mis en œuvre par ordinateur de génération d'au moins un ensemble de données associé à un ou plusieurs objets d'au moins une image d'une scène d'un environnement réel, configuré pour être fourni en entrée à un procédé mis en œuvre par ordinateur d'annotation d'au moins une trame d'image d'une scène d'un environnement réel destiné à être fourni en entrée et à l'apprentissage d'au moins un modèle d'apprentissage automatique, le procédé comprenant les étapes consistant à :

recevoir (M1), par au moins un dispositif informatique, au moins une image (30) d'une scène d'un environnement réel capturée par un capteur d'image actionné par un utilisateur,
recevoir (M1), par ledit au moins un dispositif informatique, des données audio provenant de l'utilisateur (10) détectées par au moins un capteur audio et des données de suivi du regard de l'utilisateur (10) détectées par au moins un capteur de suivi du regard humain pendant la capture de ladite au moins une image (30) par l'utilisateur, exécuter (2-1), par ledit au moins un dispositif informatique, un procédé d'analyse audio (201) analysant au moins une partie des données audio reçues provenant de l'utilisateur (10) en un format texte et générant un ensemble de termes déterminés dans le procédé d'analyse (201) indiquant une tâche ou une activité articulée par l'utilisateur lors de l'actionnement du capteur d'image,

préallouer (2-1) des objets d'intérêt à partir de l'ensemble de termes généré et déterminé dans le procédé d'analyse (201), associer une probabilité à chacun des objets d'intérêt préalloués, et générer une liste d'objets d'intérêt de la scène (203) associée à ladite au moins une image (30) comprenant une catégorie d'objet respective et une probabilité associée pour chacun des objets d'intérêt préalloués,

générer (2-1) une carte de chaleur du regard (204) à partir des données de suivi du regard reçues,

traiter au moins une partie de ladite au moins une image (30) au moyen d'un modèle de segmentation panoptique et générer un ensemble de masques de segmentation (205), chaque masque de segmentation de l'ensemble de masques de segmentation ayant une catégorie d'objet respective attribuée et une confiance de segmentation panoptique,

générer (2-3) au moins un ensemble de données comprenant un ensemble d'objets d'intérêt classés (220), lesdits objets d'intérêt étant classés conformément à au moins un score agrégé déterminé sur la base de la liste d'objets d'intérêt de la scène (203) générée, de la carte de chaleur du regard (204) générée et de l'ensemble de masques de segmentation (205) généré, configuré pour être fourni en entrée à un procédé mis en œuvre par ordinateur d'annotation (3-2) d'au moins une trame d'image (501) d'une scène d'un environnement réel destiné à être fourni en entrée et à l'apprentissage d'au moins un modèle d'apprentissage automatique.

2. Procédé selon la revendication 1, dans lequel l'ensemble d'objets d'intérêt classés (220) est configuré pour être utilisé dans un procédé mis en œuvre par ordinateur d'annotation (3-2) d'au moins une trame d'image (501) d'une scène d'un environnement réel destiné à être fourni en entrée et à l'apprentissage d'au moins un modèle d'apprentissage automatique d'une application de réalité augmentée.

3. Procédé selon l'une quelconque des revendications 1 ou 2, comprenant en outre
fournir une liste d'objets d'intérêt universels (202) non traités à partir de ladite au moins une image (30), et augmenter la liste d'objets d'intérêt de la scène (203) avec la liste d'objets d'intérêt universels.

4. Procédé selon l'une quelconque des revendications 1 à 3, comprenant en outre :

générer (2-2) une vérité terrain audio-visuelle (210) comprenant une catégorie d'objet et des informations de localisation respectives pour au moins un objet de ladite au moins une image (30) à partir des données audio reçues et des données de suivi du regard de l'utilisateur, et

apparier (2-2) la vérité terrain audio-visuelle (210) générée avec un masque de segmentation spatialement correspondant de l'ensemble de masques de segmentation (205) généré et sa catégorie d'objet attribuée.

5. Procédé selon l'une quelconque des revendications 1 à 4, dans lequel ledit au moins un score agrégé est déterminé sur la base d'une somme pondérée de (i) la probabilité du respectif objet d'intérêt figurant dans la liste d'objets d'intérêt de la scène (203), (ii) l'intensité de regard respective pour le masque de segmentation correspondant ayant une catégorie d'objet correspondant audit respectif objet d'intérêt, et (iii) la confiance de segmentation panoptique respective du masque de segmentation correspondant ayant une catégorie d'objet correspondant audit respectif objet d'intérêt.

6. Procédé selon l'une quelconque des revendications 1 à 5, dans lequel la détermination dudit au moins un score agrégé comprend :

apparier les catégories d'objet incluses dans la liste d'objets d'intérêt de la scène (203) avec des catégories d'objet respectives de l'ensemble de masques de segmentation (205) généré, et

apparier les masques de segmentation de l'ensemble de masques de segmentation (205) généré et la carte de chaleur du regard (204), la détermination dudit au moins un score agrégé comprenant, éventuellement, l'attribution d'un score provenant de la liste d'objets d'intérêt de la scène (203) à une catégorie d'objet respective qui n'a pas pu être appariée à une catégorie d'objet des masques de segmentation (205) générés.

7. Procédé selon la revendication 6, comprenant en outre l'ajout d'au moins une région d'intérêt issue de l'intensité de regard au-dessus d'un seuil prédéterminé qui n'a pas été appariée à un masque de segmentation généré à la liste d'objets d'intérêt de la scène (203), ladite au moins une région d'intérêt se voyant attribuer une catégorie d'objet non définie.

8. Procédé mis en œuvre par ordinateur de génération d'au moins un ensemble de données associé à un ou plusieurs objets d'au moins une image d'une scène d'un environnement réel, configuré pour être fourni en entrée à un procédé mis en œuvre par ordinateur d'annotation d'au moins une trame d'image d'une scène d'un environnement réel destiné à être fourni en entrée et à l'apprentissage d'au moins un modèle d'apprentissage automatique, le procédé comprenant les étapes consistant à :

recevoir (M1), par au moins un dispositif informatique, au moins une image (30) d'une scène d'un environnement réel capturée par un capteur d'image actionné par un utilisateur;

recevoir (M1), par ledit au moins un dispositif informatique, des données audio provenant de l'utilisateur (10) détectées par au moins un capteur audio et des données de suivi du regard de l'utilisateur détectées par au moins un capteur de suivi du regard humain pendant la capture de ladite au moins une image (30) par l'utilisateur (10),

exécuter (2-1), par ledit au moins un dispositif informatique, un procédé d'analyse audio (201) analysant au moins une partie des données audio reçues provenant de l'utilisateur et générant des données audio analysées indiquant une tâche ou une activité articulée par l'utilisateur ou un objet d'intérêt de la scène lors de l'actionnement du capteur d'image,

générer (2-1) une carte de chaleur du regard (204) à partir des données de suivi du regard reçues,

traiter (2-1) au moins une partie de ladite au moins une image (30) au moyen d'un modèle de segmentation panoptique et générer un ensemble de masques de segmentation (205), chaque masque de segmentation de l'ensemble de masques de segmentation ayant une catégorie d'objet respective attribuée,

générer (2-2) une vérité terrain audio-visuelle (210) comprenant des informations de localisation et une catégorie d'objet respective pour au moins un objet de ladite au moins une image (30) à partir des données audio analysées (201) et de la carte de chaleur du regard (204), et

apparier la vérité terrain audio-visuelle (210) générée avec un masque de segmentation spatialement correspondant de l'ensemble de masques de segmentation (205) généré et sa catégorie d'objet attribuée, et générer au moins un ensemble de données de la vérité terrain audio-visuelle (210) comprenant au moins une étiquette de données indiquant la catégorie d'objet respective et le masque de segmentation apparié, ledit au moins un ensemble de données généré étant configuré pour être fourni en entrée à un procédé mis en œuvre par ordinateur d'annotation (3-1, 3-2) d'au moins une trame d'image (301) d'une scène d'un environnement réel destiné à être fourni en entrée et à l'apprentissage d'au moins un modèle d'apprentissage automatique.

9. Procédé selon l'une quelconque des revendications 1 à 8, dans lequel le capteur d'image et, éventuellement, le capteur de suivi du regard humain font partie d'un dispositif informatique portable (11), en particulier de lunettes portables, porté par l'utilisateur lorsqu'il regarde la scène de l'environnement réel.

10. Procédé mis en œuvre par ordinateur d'annotation d'au moins une trame d'image (501) d'une scène d'un environnement réel, configuré pour être fourni en entrée et à l'apprentissage d'au moins un modèle d'apprentissage automatique, le procédé comprenant les étapes consistant à :

recevoir, par au moins un dispositif informatique, au moins une trame d'image (501) d'une scène d'un environnement réel à annoter et fournir ladite au moins une trame d'image à un dispositif d'affichage pour la présenter à un utilisateur ;

recevoir, par ledit au moins un dispositif informatique, au moins une partie d'un ensemble d'objets d'intérêt classés (220) fourni selon le procédé de l'une quelconque des revendications 1 à 7 ou 9,

présenter au moins une partie de l'ensemble reçu d'objets d'intérêt classés (220) sur le dispositif d'affichage tout en affichant ladite au moins une trame d'image (501) à annoter sur le dispositif d'affichage,

recevoir des instructions d'un annotateur humain demandant audit au moins un dispositif informatique d'ajouter ou d'affiner une ou plusieurs des catégories d'objet ou des masques de segmentation à ladite au moins une trame d'image (501) et augmenter ladite au moins une trame d'image avec des informations d'annotation correspondantes dans au moins un ensemble de données annotées (502) configuré pour être fourni en entrée et à l'apprentissage d'au moins un modèle d'apprentissage automatique.

11. Procédé selon la revendication 10, dans lequel ledit au moins une partie de l'ensemble d'objets d'intérêt classés (220) est présenté sur le dispositif d'affichage après réception d'instructions provenant de l'annotateur demandant audit au moins un dispositif informatique de confirmer ou de corriger (3-1) une quelconque vérité terrain audio-visuelle (210) mémorisée,

dans lequel, éventuellement, ledit au moins une partie de l'ensemble d'objets d'intérêt classés (220) présenté sur le dispositif d'affichage comprend uniquement des objets d'intérêt qui ne sont pas inclus dans la vérité terrain audio-visuelle (210) confirmée ou corrigée.

**12.** Procédé mis en œuvre par ordinateur d'annotation d'au moins une trame d'image (301) d'une scène d'un environnement réel configuré pour être fourni en entrée et à l'apprentissage d'au moins un modèle d'apprentissage automatique, le procédé comprenant les étapes consistant à :

recevoir, par au moins un dispositif informatique, au moins une trame d'image (301) d'une scène d'un environnement réel à annoter et fournir ladite au moins une trame d'image à un dispositif d'affichage pour la présenter à un utilisateur ;
recevoir, par ledit au moins un dispositif informatique, au moins un ensemble de données d'une vérité terrain audio-visuelle (210) généré selon le procédé de l'une quelconque des revendications 8 ou 9,
recevoir des instructions d'un annotateur humain demandant audit au moins un dispositif informatique d'ajouter ou d'affiner une ou plusieurs des catégories d'objet respectives et des masques de segmentation à ladite au moins une trame d'image (301) et augmenter ladite au moins une trame d'image avec des informations d'annotation correspondantes dans au moins un ensemble de données annotées (302) configuré pour être fourni en entrée et à l'apprentissage d'au moins un modèle d'apprentissage automatique.

**13.** Procédé selon la revendication 12, comprenant en outre :

présenter un ou plusieurs masques de segmentation de l'ensemble de masques de segmentation (205) sur le dispositif d'affichage de manière superposée avec ladite au moins une trame d'image (301),
recevoir des instructions de l'annotateur demandant audit au moins un dispositif informatique de confirmer ou de corriger ledit au moins un ensemble de données d'une vérité terrain audio-visuelle (210) en confirmant ou en affinant une ou plusieurs des catégories d'objet respectives et du masque de segmentation présenté.

**14.** Procédé selon l'une quelconque des revendications 10 à 13, dans lequel ladite au moins une trame d'image (301, 501) correspond à ladite au moins une image (30) capturée par le capteur d'image ou, si ladite au moins une image (30) fait partie d'un flux vidéo, correspond à une image capturée par le capteur d'image précédant ou succédant à ladite au moins une image (30) capturée par le capteur d'image.

**15.** Programme d'ordinateur comprenant des instructions qui, lorsque le programme est exécuté par au moins un dispositif informatique, amènent ledit au moins un dispositif informatique à mettre en œuvre le procédé selon l'une quelconque des revendications précédentes.

# EP 4 459 566 B1

## FIGURE 1

FIGURE 1

M1 DATA COLLECTION

- AUDIO CAPTIONING
- GAZE/ATTENTION
- EGOCENTRIC VIDEO

L1 CONTEXT DESCRIPTIONS

L2 OBJECT IDENTIFICATION

M2 PRE-PROCESSING

2-1
AUDIO PARSING 201
GAZE MAPPING 204
PANOPTIC SEGMENTATION 205

202 UNIVERSAL OOI LIST

203 SCENE OOI LIST

2-2 AUDIO-VISUAL GROUND TRUTH 210

2-3 RANKED OOI LIST 220

M3 ANNOTATION STAGE 1

3-1 ANNOTATOR CONFIRMS/CORRECTS AV GROUND TRUTH PER IMAGE VIA OVERLAPPING MASKS

M3 ANNOTATION STAGE 2

3-2 ANNOTATOR GOES THROUGH LIST (WHICH INCLUDES HIGHLIGHTED MASKS, IF AVAILABLE) AND ADDS CATEGORIES/OBJECTS ACCORDING TO THE LIST

22

# FIGURE 2  M1 COLLECTION PROCESS

## LEVEL 1
### CONTEXT DESCRIPTIONS

## LEVEL 2
### OBJECT IDENTIFICATION

X  GAZE

□ OBJECT IN FRAME

THIS SESSION WILL BE ABOUT COOKING PASTA

30

31

32

33

CUT    COOK    CLEAN

11

10
COLLECTOR

12

□ OBJECT IN FRAME

NOW I AM MAKING PASTA SAUCE

31

32

33

CUT    COOK    CLEAN

COLLECTOR

□ OBJECT IN FRAME

THIS IS A TOMATO

X  31

32

33

CUT    COOK    CLEAN

COLLECTOR

EP 4 459 566 B1

EP 4 459 566 B1

## AUDIO CAPTIONING

THIS SESSION WILL BE ABOUT COOKING PASTA

NOW I AM MAKING PASTA SAUCE

**201** AUDIO PARSING

"COOKING" "PASTA" "SAUCE"

## NLP MODEL

PASTA

CUTTING BOARD

PASTA SAUCE

TOMATO

KNIFE

**203** SCENE OOI LIST

- TOMATO
- CUTTING BOARD
- PASTA
- KNIFE
- GARLIC

**204** GAZE MAP

0.9

0.7

0.95

X

## PANOPTIC SEGMENTATION

0.9

0.4

SWORD

GARLIC 0.8

KNIFE

**203** SCENE OOI LIST

| | |
|---|---|
| TOMATO | 87% |
| CUTTING BOARD | 75% |
| PASTA | 66% |
| KNIFE | 60% |
| GARLIC | 10% |

**205**

RANKED OOI LIST

| | |
|---|---|
| KNIFE | 0.70 |
| GARLIC | 0.63 |
| GAZE ROI -A | 0.32 |
| TOMATO | 0.29 |
| CUTTING BOARD | 0.25 |
| PASTA | 0.22 |
| SWORD | 0.13 |

**220**

FIGURE 3

M2 PRE-PROCESSING TO RANKED OOI LIST

# FIGURE 4   3-1 CONFIRMING AV GROUND TRUTH

X GAZE

OBJECT MASKS

AUDIO LABEL

MODEL LABEL

"TOMATO"

GARLIC

301

TOMATO

302

EP 4 459 566 B1

FIGURE 5   3-2 RANKED OOI REVIEW

RANKED OOI LIST   220

| KNIFE | 0.70 |
| GARLIC | 0.63 |
| GAZE ROI -A | 0.32 |
| TOMATO | 0.29 |
| CUTTING BOARD | 0.25 |
| PASTA | 0.22 |
| SWORD | 0.13 |

501

TOMATO
KNIFE
GAZE ROI-A
X

502

TOMATO
KNIFE
CUTTING BOARD

EP 4 459 566 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 9740949 B1

- EP 3540691 A1

### Non-patent literature cited in the description

- **KO, B. C.** ; **NAM, J. Y.** Object-of-interest image segmentation based on human attention and semantic region clustering.. *JOSA A*, 2006, vol. 23 (10), 2462-2470
- Saliency-based identification and recognition of pointed-at objects.. **SCHAUERTE, B** ; **RICHARZ, J.** ; **FINK, G. A**. In 2010 IEEE/RSJ International Conference on Intelligent Robots and Systems. IEEE, October 2010, 4638-4643
- **BURRA, N** ; **MARES, I.** ; **SENJU, A.** The influence of top down modulation on the processing of direct gaze. *Wiley Interdisciplinary Reviews: Cognitive Science*, 2019, vol. 10 (5), e1500

- **T HART, B. M.** ; **SCHMIDT, H. C** ; **ROTH, C.** ; **EINHÄUSER, W.** Fixations on objects in natural scenes: dissociating importance from salience. *Frontiers in psychology*, 2013, vol. 4, 455
- Object of Interest Segmentation in Video Sequences with Gaze Data. **KRIEGER, L.** ; **HEIDEMANN, G** ; **SCHÖNING, J.** In 2018 IEEE International Conference on Image Processing, Applications and Systems (IPAS). IEEE, December 2018, 104-109
- **KAR, A.** ; **KIM, S. W** ; **BOBEN, M** ; **GAO, J** ; **LI, T** ; **LING, H** ; **FIDLER, S.** *Toronto Annotation Suite*, 2021, https://aidemos.cs.toronto.edu/toras
- **PREETHI VAIDYANATHAN et al.** Computational framework for fusing eye movements and spoke narratives for image annotation. *Journal of Vision*, 01 July 2020, vol. 20 (7), 1-28